(19) Europäisches Patentamt / European Patent Office / Office européen des brevets

(11) **EP 3 362 775 B1**

(12) **FASCICULE DE BREVET EUROPEEN**

(45) Date de publication et mention de la délivrance du brevet:
**31.07.2019 Bulletin 2019/31**

(51) Int Cl.:
***G01N 3/08*** *(2006.01)*

(21) Numéro de dépôt: **16777642.6**

(22) Date de dépôt: **28.09.2016**

(86) Numéro de dépôt international:
**PCT/EP2016/073142**

(87) Numéro de publication internationale:
**WO 2017/063890 (20.04.2017 Gazette 2017/16)**

(54) **PROCÉDÉ DE CONTRÔLE DE FISSURATION D'UN MATÉRIAU ET DISPOSITIF DE MISE EN OEUVRE ASSOCIÉ**

VERFAHREN ZUR STEUERUNG DER SPALTUNG EINES MATERIALS UND ENTSPRECHENDE VORRICHTUNG ZUR DURCHFÜHRUNG DAVON

METHOD FOR CONTROLLING FISSURING OF A MATERIAL AND ASSOCIATED DEVICE FOR THE IMPLEMENTATION THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2015 FR 1559883**

(43) Date de publication de la demande:
**22.08.2018 Bulletin 2018/34**

(73) Titulaire: **Electricité de France**
**75008 Paris (FR)**

(72) Inventeurs:
- **KAZYMYRENKO, Cyril**
  **91120 PALAISEAU (FR)**
- **CARPIUC-PRISACARI, Andreea**
  **91300 MASSY (FR)**
- **PONCELET, Martin**
  **75010 Paris (FR)**
- **JAILIN, Clément**
  **94230 Cachan (FR)**
- **HILD, François**
  **92290 Chatenay Malabry (FR)**
- **LECLERC, Hugo**
  **94230 Cachan (FR)**

(74) Mandataire: **Cabinet Plasseraud**
**66, rue de la Chaussée d'Antin**
**75440 Paris Cedex 09 (FR)**

(56) Documents cités:
**EP-A1- 0 294 267     EP-A1- 0 603 029**

- **SYLVAIN PATINET ET AL: "Propagation des fronts de fissure plane dans les matériaux fragiles hétérogènes de dimensions finies", MECANIQUE ET INDUSTRIES, vol. 12, no. 3, 1 janvier 2011 (2011-01-01), pages 199-204, XP055286109, FR ISSN: 1296-2139, DOI: 10.1051/meca/2011112**
- **A Carpiuc ET AL: ""Drawing with a crack in concrete": a hybrid test to control mixed-mode crack propagation", , 30 août 2013 (2013-08-30), XP055286232, Extrait de l'Internet: URL:http://documents.irevues.inist.fr/bits tream/handle/2042/52548/a_9R13RA11.pdf?seq uence=1 [extrait le 2016-07-06] cité dans la demande**

**Description**

**DOMAINE TECHNIQUE**

L'invention se rapporte au domaine de la fissuration contrôlée des matériaux, notamment en vue de déterminer les propriétés en fissuration d'un volume donné d'un matériau. L'invention se rapporte également au domaine des dispositifs pour la fissuration contrôlée des matériaux, notamment les dispositifs adaptés pour effectuer une fissuration contrôlée d'échantillons de matériaux appelés éprouvettes.

**ARRIÈRE-PLAN TECHNOLOGIQUE**

La formation et la propagation de fissures dans des structures industrielles représentent un enjeu de sécurité majeur. Outre des aspects visuels et esthétiques, l'amorçage et la propagation de fissures peuvent donner lieu à des fuites indésirables au niveau de structures sensibles telles que, par exemple, les enceintes d'un réacteur nucléaire, un barrage hydroélectrique, un réservoir cryogénique ou des canalisations.

La compréhension des propriétés en fissuration des matériaux utilisés dans de telles structures, ainsi que la quantification du phénomène de fissuration suscite par conséquent un intérêt considérable.

Le comportement en fissuration d'une structure constituée d'un matériau est généralement lié à son état de déformation et aux contraintes mécaniques à proximité de la pointe de la fissure. Cet état local de contraintes et déformations peut être modifié par application de déplacements aux bords de la structure et d'efforts mécaniques tels que par exemple une pression extérieure, le poids de la structure ou une force centrifuge subie par la structure. Afin de généraliser ces notions dans la terminologie technique couramment utilisée dans la littérature, il est fait référence à des « chargements » mécaniques subis par la structure. Le terme « chargement » utilisé ci-après recouvre toutes ces notions.

D'ordinaire, la fissuration d'un matériau est déterminée en se fondant sur des expériences visant à appliquer en laboratoire, sur un échantillon d'un volume du matériau appelé éprouvette, les mêmes chargements mécaniques que ceux subis par le volume de matériau en conditions d'utilisation. Il est ainsi courant d'appliquer des chargements mécaniques préalablement fixés et d'observer l'évolution d'une fissure se propageant dans le volume du matériau. Un modèle numérique s'appuyant sur un calcul par éléments finis peut être utilisé pour simuler la fissure attendue dans le volume après application au matériau de chargements mécaniques fixés au préalable. Une comparaison des expériences réalisées sur éprouvette aux simulations permet d'affiner le modèle numérique et d'obtenir une information qualitative et/ou quantitative sur la nature du comportement en fissuration du matériau.

Les modèles de propagation d'une fissure dans un matériau reposent généralement sur deux approches différentes pour modéliser la réponse d'un volume de matériau à un chargement mécanique.

Une première approche, appelée « mécanique élastique linéaire de la rupture » (MELR), propose un cadre théorique adapté aux matériaux présentant un comportement sous-jacent linéaire. La fissure y est présentée comme une singularité géométrique de dimension bien établie. La MELR repose sur un calcul global de paramètres physiques du volume d'un matériau pouvant servir à caractériser le champ des contraintes et déformations au voisinage de la pointe d'une fissure. Ces paramètres sont généralement dénommés « facteurs d'intensité des contraintes » (FIC), et sont connus dans le milieu de l'ingénierie spécialisée dans les calculs industriels. Ces paramètres, généralement notés en fonction de la nature de la sollicitation associée $K_I$, $K_{II}$, $K_{III}$ peuvent être reliés aux termes $\sigma_{ij}$ du champ des contraintes par la relation suivante :

$$\sigma_{ij} = \frac{K_m}{\sqrt{2\pi r}} f_{ij}(\theta)$$

où r et θ sont des coordonnées polaires au voisinage de la pointe de la fissure et f désigne une fonction de l'angle θ. Les indices I, II et III accompagnant les FIC ($K_m$) désignent respectivement trois modes de fissuration observés dans les matériaux. Le mode I correspond à un chargement de traction perpendiculaire à un plan contenant la fissure, le mode II correspond à un chargement de cisaillement agissant parallèlement à un plan contenant la fissure et perpendiculairement au front de la fissure et le mode III correspond à un chargement de cisaillement agissant parallèlement à la fois à un plan contenant la fissure et au front de la fissure.

Typiquement, les valeurs de FIC évoluent linéairement en fonction du chargement mécanique appliqué au matériau. Ces valeurs peuvent être déterminées en analysant l'état de contrainte localement au voisinage de la pointe d'une fissure. Toutefois, ce comportement linéaire n'est observé que pour des chargements inférieurs à un chargement critique de rupture, associée à des valeurs de FIC seuil appelées ténacité.

Le voisinage de la pointe dont il est question plus haut désigne généralement une zone autour de la pointe de la fissure, typiquement une zone torique ou sphérique, dans laquelle des calculs par éléments finis sont effectués pour déterminer la réponse sous chargement du matériau. Par analogie, une représentation empirique du comportement en fissuration d'un matériau implique généralement l'introduction d'une zone autour de la pointe de la fissure appelée zone de pré-fissuration, ou encore « process zone » selon la terminologie anglo-saxonne. Cette zone comprend les points du matériau qui sont le plus susceptibles de subir une fissuration sous l'effet du chargement mécanique appliqué.

Selon la MELR, une fissure s'amorce lorsqu'une valeur seuil pour les FIC est atteinte. Cette valeur seuil est une propriété intrinsèque du matériau. L'application de la MELR suppose généralement un maillage du volume du matériau afin d'établir une équation algébrique linéaire pour la résolution du système liant les termes de chargements aux FIC. Un défaut de cette approche, qui ne prend pas en compte l'évolution de « process zone », est qu'elle est essentiellement adaptée pour modéliser la propagation de fissures dans des matériaux fragiles tels que les verres, les céramiques et les matériaux réfractaires, ou le plexiglas, mais ne parvient pas à correctement modéliser la propagation d'une fissure dans des matériaux présentant une non-linéarité (plasticité, micro-fissuration) plus grande tels que le béton, le graphite ou les matériaux métalliques à basse température.

Une autre classe d'approches, qui comble cette lacune, repose sur une modélisation du champ moyen d'endommagement du volume d'un matériau, et est appelée « modèle d'endommagement diffus ». Cette approche utilise une description thermodynamique du volume du matériau et de l'apparition de défauts dans ce volume, pris en compte sous forme de valeur moyenne. L'application d'un chargement au volume se traduit dans ce modèle par une certaine probabilité de passer d'un comportement élastique sain vers un comportement adoucissant, caractérisé par une chute de rigidité mécanique irréversible. La naissance et la croissance de défauts microscopiques sont traduites par une évolution du champ d'endommagement. L'approche du modèle d'endommagement diffus permet ainsi de décrire des fissures comme des lignes de niveau dans le champ d'endommagement rendu scalaire. Aucun remaillage du volume n'est nécessaire et l'endommagement d'un point du volume est déterminé en relation avec l'état de chargement mécanique au voisinage de ce point.

Toutefois, ces deux approches présentent toutes deux des limitations pour modéliser correctement le comportement en fissuration d'une éprouvette. Notamment, les deux approches modélisent difficilement la propagation d'une fissure dans une éprouvette subissant des chargements mécaniques fixés au préalable comme décrit ci-avant. D'une part, il existe un problème d'identification des paramètres des modèles. D'autre part, les modèles de fissuration se fondent sur certaines approximations et ne reproduisent pas de manière suffisamment précise le comportement réel en fissuration d'un matériau. Notamment, la propagation d'une fissure dans le volume d'un matériau sujet à un chargement mécanique fixé au préalable n'obéit généralement pas à un comportement linéaire. Or les non-linéarités ne sont pas compatibles avec la MELR, et renvoient également des résultats insatisfaisants avec l'approche des endommagements diffus. Enfin, l'apparition de comportements en fissuration non-linéaires ne répond pas au cahier des charges industriel en matière de contrôle des phénomènes de fissuration.

Il est par conséquent recherché un procédé permettant d'obtenir une information quantitative plus fine et plus précise sur le comportement en fissuration d'un matériau.

Une approche originale permettant d'augmenter le niveau de fiabilité des deux approches présentées ci-avant est proposée dans le document « Drawing with a crack in concrete: a hybrid test to control mixed-mode crack propagation » par *Carpiuc et al.*, 21e Congrès Français de Mécanique, 2013. Selon l'approche originale proposée dans ce document, il n'est plus question d'appliquer un chargement mécanique fixe à un volume de matériau et d'observer la fissure qui se propage ensuite dans ce matériau. Le procédé proposé dans ce document consiste à fixer un chemin de fissuration cible dans le volume d'un matériau et d'appliquer successivement différents chargements mécaniques permettant de faire propager une fissure dans une éprouvette le long du chemin de fissuration cible. Les chargements mécaniques appliqués à l'éprouvette sont réévalués après chaque incrément propageant la fissure dans le volume tout au long du procédé de fissuration afin de s'assurer que la fissure créée dans l'éprouvette suit bien, de manière contrôlée, le chemin de fissuration cible. Cette approche originale présente l'avantage de fractionner l'évolution de fissuration en plusieurs étapes, ce qui permet de réduire les non-linéarités de chaque étape de la propagation d'une fissure dans une éprouvette et d'augmenter la fiabilité prédictive des modèles utilisés pour simuler la propagation de la fissure. En outre, cette approche permet d'utiliser un modèle de propagation fondé sur la MELR pour simuler successivement la propagation d'une fissure réorientée dans le volume du matériau pour suivre le chemin de fissuration cible.

Toutefois, malgré les perfectionnements apportés par cette approche en matière de caractérisation du comportement en fissuration d'un matériau, elle ne permet toujours pas de contrôler la vitesse de propagation d'une fissure et d'éviter ainsi l'apparition d'instabilités lors de la propagation de la fissure.

Il est par conséquent recherché un procédé permettant de contrôler la fissuration d'un matériau en générant de manière stable et contrôlée une fissure suivant un trajet cible.

## EXPOSE DE L'INVENTION

Pour répondre aux problèmes exposés ci-avant, la présente invention propose un procédé de contrôle de fissuration d'un matériau selon la revendication 1, le procédé comprenant :

- définir un chemin de fissuration cible dans un volume donné de matériau ;
- appliquer des chargements mécaniques audit matériau pour contrôler la propagation d'une fissure dans le volume de sorte que la fissure se propage dans le matériau sensiblement suivant le chemin de fissuration cible.

En outre, le procédé comprend :

- appliquer un chargement de stabilisation audit volume, le chargement de stabilisation étant configuré pour éviter une propagation instable de la fissure.

Contrairement aux procédés de fissuration existants, l'invention propose de combiner l'utilisation de chargements mécaniques appliqués au matériau pour y faire propager une fissure selon un chemin cible avec l'utilisation d'un chargement supplémentaire dédié à la stabilisation de la fissure. La forme même de l'éprouvette peut contribuer à rendre stable la propagation d'une fissure dans l'éprouvette pour certains types de chargements. Ceci n'est toutefois pas une généralité. L'invention permet ainsi de stabiliser n'importe quelle fissuration indépendamment de la forme de l'éprouvette en appliquant à une éprouvette un chargement supplémentaire distinct du ou des chargements appliqués pour orienter la propagation d'une fissure. Le chargement de stabilisation s'ajoute donc aux chargements mécaniques calculés pour forcer la fissure à suivre le chemin cible. Typiquement, l'application du chargement de stabilisation n'affecte pas les FIC qui ont été utilisés pour déterminer les chargements mécaniques à appliquer pour propager la fissure suivant le chemin cible. A partir de ce constat contre-intuitif, il devient possible de décorréler le problème d'identification des chargements mécaniques utilisés pour contrôler la direction de propagation de la fissure du problème d'identification des chargements permettant de maintenir une propagation stable de la fissure.

Il est entendu par « propagation instable » de la fissure, une propagation dans laquelle au moins un des paramètres utilisés pour guider la fissure le long du chemin cible n'est plus contrôlé. En d'autres termes, une propagation instable se manifeste lorsque la longueur de la fissure générée dans le volume après application de chargements mécaniques dépasse d'un certain pourcentage une longueur attendue, par exemple un seuil d'incrément de longueur estimé d'après le modèle numérique mis en oeuvre pour déterminer les chargements mécaniques à appliquer. Typiquement, une fissure dont la longueur après application de chargements mécaniques augmente d'une valeur supérieure de 10% au seuil d'incrément de longueur peut être considérée comme issue d'une propagation instable. Une propagation instable peut également se manifester par une déviation angulaire de la fissure générée supérieure par exemple à 5° par rapport à la direction d'orientation attendue de la fissure. Une fissuration instable se manifeste lorsque la vitesse de propagation de la fissure n'est plus maîtrisée, ce qui génère des sauts dans la propagation, même pour une évolution de chargement « infiniment lente ».

Contrairement aux approches d'art antérieur, dans lesquelles le problème de la stabilisation de la fissure est généralement considéré comme étant indissociablement lié au problème de détermination des paramètres mécaniques nécessaires à la propagation d'une fissure, l'invention propose une méthode originale et contre-intuitive dissociant ces deux problèmes.

Avantageusement, l'application du chargement de stabilisation comprend en outre :

- appliquer un gradient de chargement en traction-compression en amont d'une pointe de la fissure.

L'application d'un gradient de chargements en traction-compression en amont d'une pointe de la fissure permet de générer un chargement stabilisateur de la propagation de la fissure. Le mécanisme physique derrière cette stabilisation, donné à titre indicatif et non limitatif, sera décrit plus précisément ci-après.

Selon un mode de réalisation, l'application du chargement de stabilisation comprend en outre :

- estimer la valeur d'un facteur d'intensité des contraintes représentatif d'un état de chargement en traction subi par le matériau au voisinage d'une pointe de la fissure perpendiculairement à la fissure ;
- choisir un chargement de stabilisation conservant ou diminuant la valeur du facteur d'intensité des contraintes sur une longueur de propagation donnée de la fissure.

Une caractérisation plus précise de la configuration que peut vérifier le chargement de stabilisation pour éviter l'apparition d'instabilités dans la propagation de la fissure peut s'exprimer à partir du FIC $K_I$. En particulier, le chargement de stabilisation est choisi en comparant l'évolution du FIC $K_I$ estimé dans le voisinage de la pointe de la fissure entre deux positions successives de la pointe de la fissure. Notamment, si la fissure se propage d'un seuil d'incrément de longueur $\Delta l$ dans le volume suite à l'application du même chargement mécanique, la pointe de la fissure passe d'une position x à une position $x+\Delta l$, et le FIC $K_I(x+\Delta l)$ à la position $x+\Delta l$ ne devrait pas dépasser la valeur du FIC $K_I(x)$ à la position x.

Notamment, le procédé peut en outre comprendre :

- choisir un chargement de stabilisation maintenant la valeur du facteur d'intensité des contraintes en amont de la fissure inférieure à une valeur limite appelée ténacité du matériau.

Les FIC d'un volume de matériau évoluent linéairement en fonction de l'amplitude de chargement appliqué au volume du matériau. Toutefois, pour des chargements supérieurs à un seuil de rupture, cette dépendance linéaire est rompue. En outre, pour des valeurs de FIC supérieures à la ténacité, le comportement en fissuration du matériau peut devenir instable.

Selon un mode de réalisation avantageux, l'application des chargements mécaniques est effectuée en exploitant au moins un premier degré de liberté du volume et un deuxième degré de liberté du volume ; l'application du chargement de stabilisation est effectuée en exploitant un troisième degré de liberté du volume.

Typiquement, les chargements mécaniques appliqués au matériau pour initier la propagation de la fissure d'un incrément de longueur donné nécessitent au moins un degré de liberté indépendant : la valeur de l'amplitude de chargement. De surcroît le contrôle du chemin la propagation d'une fissure plane (bidimensionnelle) peut ne reposer que sur deux paramètres physiques (par exemple un angle de propagation de la fissure et un seuil d'incrément de longueur de la fissure, qui peuvent être reliés à des paramètres de direction et d'amplitude de chargement, et permettent par exemple de caractériser les composantes en traction et en cisaillement du chargement appliqué au volume). En d'autres termes, la fissure peut se propager de manière contrôlée dans le volume en utilisant deux degrés de liberté du volume. Par extension, les chargements mécaniques pour enclencher et contrôler l'avancée de la propagation de certaines fissures 3D non planes dans le volume du matériau peuvent ne reposer que sur trois paramètres physiques (par exemple l'angle de propagation, un seuil d'incrément de longueur de propagation et le niveau de pivotement du front de propagation). Plus l'évolution du front de fissuration est complexe plus le nombre de degrés de liberté activés peut être important. Tous ces degrés de liberté (au moins deux pour une fissure se propageant en deux dimensions, trois voire plus pour une fissure se propageant en trois dimensions) servent pour le contrôle géométrique de la propagation de fissure. Les degrés de liberté de contrôle géométrique peuvent être découplés du degré de liberté de stabilisation. Pour maîtriser la stabilité de propagation un degré de liberté supplémentaire est donc introduit. Le chargement de stabilisation, appliqué selon le procédé de l'invention, repose typiquement sur un troisième paramètre, ou degré de liberté, caractérisant par exemple une rotation ou compression locale appliquées au volume.

Selon un mode de réalisation, le chargement de stabilisation comprend une compression en amont d'une pointe de la fissure.

Selon un mode de réalisation, l'application du chargement de stabilisation comprend en outre :

- appliquer un chargement en plusieurs zones distinctes du volume.

Selon un autre mode de réalisation, le chargement de stabilisation comprend une rotation.

Ces modes de réalisation permettent d'appliquer un chargement qui a pour propriété de créer une compression en amont de la pointe de la fissure. Cette compression permet de vérifier le critère de stabilité défini ci-avant.

Selon un mode de réalisation, le procédé comprend :

- contrôler indépendamment la propagation de deux fissures dans le volume.

L'invention permet en effet d'appliquer des chargements de stabilisation adaptés pour le contrôle simultané de la propagation stable de deux fissures dans un matériau.

Avantageusement, lorsque la fissure s'écarte du chemin de fissuration cible, le procédé peut en outre comprendre :

- réduire des chargements mécaniques appliqués au matériau ;
- appliquer de nouveaux chargements mécaniques permettant d'orienter la fissure en direction du chemin de fissuration cible.

La réduction progressive des chargements mécaniques appliqués à un volume de matériau bénéficiant du procédé de fissuration de l'invention assure un meilleur contrôle sur la stabilité de la fissure lors d'une réorientation de cette dernière. En effet, lorsqu'une fissure doit être réorientée, il est préférable de d'abord retirer tous les chargements mécaniques appliqués à l'éprouvette jusqu'à ce que la fissure se referme et d'appliquer ensuite les nouveaux chargements mécaniques adaptés pour une réorientation de la fissure. Ceci permet d'éviter le dépassement fortuit de la ténacité ou la réorientation instable de la fissure qui pourraient survenir si les nouveaux chargements mécaniques étaient appliqués en conjonction avec des chargements mécaniques actuels sans diminuer leur intensité.

Selon un mode de réalisation avantageux, le procédé comprend en outre :

- mesurer l'avancement d'une pointe de la fissure dans le volume ;
- modifier les chargements mécaniques lorsqu'une longueur de propagation de la fissure atteint une valeur seuil correspondant à un incrément seuil prédéfini.

En se fixant une longueur de propagation seuil, il est possible de maintenir un nombre de réorientations de la fissure estimable d'après la longueur du chemin de fissuration cible. Cette approche peut s'avérer intéressante pour les fissures cibles présentant peu de sinuosité.

Selon un mode de réalisation avantageux, le procédé comprend en outre :

- mesurer l'avancement d'une pointe de la fissure dans le volume ;
- identifier un écart entre la position de la pointe de la fissure et le chemin de fissuration cible ;
- modifier les chargements mécaniques lorsque l'écart atteint une valeur seuil correspondant à un écart seuil prédéfini.

En définissant une valeur seuil pour l'écart entre le chemin cible et le chemin de fissuration effectif dans le volume, l'invention offre un contrôle sur le degré de précision de la fissuration contrôlée obtenue. Pour assurer le suivi de la fissure propagée dans le volume, une technique utilisant par exemple la corrélation d'images numériques (CIN) peut être utilisée. D'autres techniques peuvent également être envisagées, comme l'utilisation d'un jeu de jauges de déformation ou de LVDT (en anglais : Linear Variable Differential Transformer).

Notamment, lorsque le seuil est atteint, le procédé peut en outre comprendre :

- déterminer une intersection d'un cercle ayant pour rayon un incrément de longueur, centré sur la pointe de la fissure, avec le chemin de fissuration cible ;
- appliquer des chargements mécaniques au matériau pour orienter la fissure en direction de l'intersection.

Avantageusement, le procédé peut en outre comprendre le processus suivant mis en oeuvre itérativement :

- effectuer une simulation de la propagation d'une fissure selon le chemin de fissuration cible dans un modèle du volume prenant en compte la fissure afin de déterminer les chargements mécaniques permettant d'orienter la fissure suivant le chemin de fissuration cible ;
- appliquer au matériau des chargements mécaniques déterminés par la simulation.

Ce procédé d'identification de chargements mécaniques permettant la réorientation de la fissure correspond à une résolution du problème inverse. Celle-ci repose typiquement sur deux éléments : une formulation mathématique en système d'équations, et une méthode de résolution de ce dernier.

Notamment, le modèle du volume peut être réalisé en effectuant un maillage en éléments finis, et la simulation peut être menée en utilisant un algorithme de résolution de problèmes inverses s'appuyant sur la mécanique élastique linéaire de la rupture.

Alternativement, le modèle du volume peut être réalisé en effectuant un maillage en éléments finis et la simulation peut être menée en utilisant un algorithme de résolution de problèmes inverses s'appuyant sur un modèle d'endommagements diffus.

Les étapes employant des simulations pour déterminer les chargements mécaniques à appliquer au volume décrites ci-avant sont mises en oeuvre de manière répétée pour assurer une réorientation de la fissure créée dans le volume du matériau suivant le chemin de fissuration cible. Tout écart par rapport au chemin cible atteignant une valeur seuil prédéfinie implique la mise en place d'une nouvelle simulation prenant en compte la nouvelle géométrie du volume c'est-à-dire notamment la nouvelle position de la pointe de la fissure. La détermination des chargements mécaniques à appliquer repose sur la résolution d'un problème inverse.

Selon un mode de réalisation, le volume de matériau comprend une fissure initiale et des zones d'arrêt, le procédé comprenant en outre :

- définir le chemin de fissuration cible de sorte à diriger la fissure initiale vers une zone d'arrêt.

L'utilisation du procédé pour réorienter une fissure initialement présente dans un volume de matériau vers une zone d'arrêt permet d'éviter une fuite indésirable que pourrait provoquer une propagation selon un trajet aléatoire de la fissure initiale. La redirection de la fissure vers une zone d'arrêt permet également d'empêcher la fissure initiale de se propager au-delà de la zone d'arrêt, cette dernière se présentant généralement sous la forme d'un trou.

L'invention se rapporte également à un système pour contrôler la fissuration d'un matériau selon la revendication 14, le système comprenant une machine d'essais adaptée pour appliquer des chargements mécaniques audit matériau en contrôlant la propagation d'une fissure dans un volume du matériau de sorte que la fissure se propage dans le matériau sensiblement suivant un chemin de fissuration cible, la machine d'essai étant en outre configurée pour appliquer un chargement de stabilisation au matériau permettant d'éviter une propagation instable de la fissure.

Notamment, le système peut en outre comprendre :

- un capteur adapté pour déterminer une position de la pointe de la fissure dans le volume ; et
- une unité informatique adaptée pour effectuer une simulation d'une propagation de la fissure et pour piloter la machine d'essais.

Le système de l'invention est typiquement agencé de sorte à pouvoir mettre en oeuvre le procédé exposé ci-avant.

## DESCRIPTIF DES FIGURES

Le procédé objet de l'invention sera mieux compris à la lecture de la description qui suit d'exemples de réalisations présentés à titre illustratif, aucunement limitatifs, et à l'observation des dessins ci-après sur lesquels :

- la figure 1 est une représentation schématique d'un volume de matériau soumis à des chargements destinés à propager une fissure dans le volume selon le procédé de l'invention ;

- les figures 2a et 2b sont des représentations schématiques de chargements en traction/compression subis par un volume de matériau ;

- les figures 3a et 3b sont des représentations schématiques de chargements en cisaillement subis par un volume de matériau ;

- les figures 4a et 4b sont des représentations schématiques de chargements en rotation subis par un volume de matériau ;

- les figures 5a et 5b sont des représentations schématiques de chargements mécaniques subis par un volume de matériau ;

- la figure 6 est une représentation schématique de la propagation d'une fissure contrôlée au moyen de deux degrés de liberté au moins ;

- la figure 7 est une représentation schématique de la propagation d'une fissure stabilisée au moyen d'un chargement de stabilisation supplémentaire selon un mode de réalisation ;

- la figure 8 est une représentation schématique de la propagation d'une fissure selon une variante de réalisation de l'invention ;

- les figures 9a, 9b et 9c sont des représentations schématiques illustrant trois variantes de critères enclenchant la réorientation d'une fissure selon le procédé de l'invention ;

- la figure 10 est un ordinogramme illustrant un exemple d'algorithme utilisé par le procédé de l'invention ;

- la figure 11 est une représentation schématique de la réorientation contrôlée d'une fissure en direction d'une zone d'arrêt ;

- la figure 12 est une représentation schématique d'un système permettant de mettre en oeuvre le procédé de l'invention.

Pour des raisons de clarté, les dimensions des différents éléments représentés sur ces figures ne sont pas nécessairement en proportion avec leurs dimensions réelles. Sur les figures, des références identiques correspondent à des éléments identiques.

## DESCRIPTION DÉTAILLÉE

L'invention propose un procédé permettant de contrôler la propagation d'une fissure dans un volume de matériau, et éviter que cette fissure ne se propage de manière instable dans le volume.

Pour illustrer schématiquement l'effet du procédé sur un volume de matériau, la présente description fournit des exemples de mise en oeuvre pour faire propager une fissure dans un volume sensiblement bidimensionnel. Le volume sera considéré comme bidimensionnel pour simplifier les illustrations ci-après mais il convient de remarquer que les résultats présentés ci-après se transposent sans difficulté dans un cas à trois dimensions.

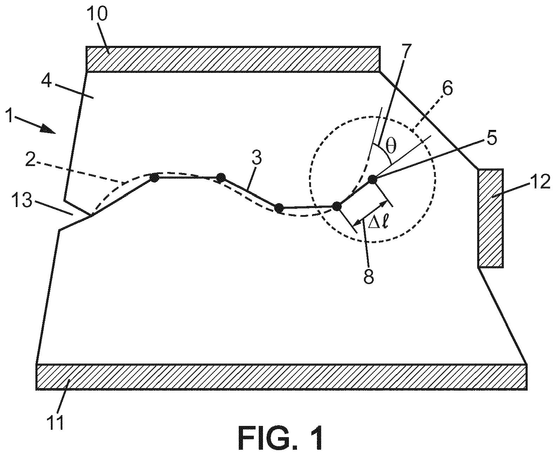

La figure 1 propose une illustration d'un matériau 1, appelé éprouvette, de forme sensiblement rectangulaire. L'éprouvette se présente sous la forme d'un volume 4 possédant pour dimensions typiques : 200 mm x 200 mm x 50 mm. Comme illustré sur la figure 1, une entaille 13 est ajoutée sur un bord latéral de l'éprouvette. Bien que l'entaille représentée sur la figure 1 soit de forme triangulaire, d'autres formes d'entaille peuvent tout aussi bien être envisagées. L'éprouvette est maintenue entre plusieurs plaques comprenant notamment une plaque fixe formant support 11, une plaque mobile 10 destinée à appliquer des chargements mécaniques à l'éprouvette et une plaque 12 également apte à appliquer des chargements mécaniques à l'éprouvette. La plaque mobile 10 est immobile par rapport au matériau 1 mais est mobile par rapport à la plaque formant le support 11. La plaque 12 est en réalité optionnelle et d'autres réalisations peuvent soit être dépourvues d'une telle plaque 12 ou en comprendre plusieurs autres.

Au cours du procédé de contrôle de fissuration de la présente invention, un chemin de fissuration cible 2 est défini dans le volume 4 du matériau 1. L'objectif du procédé de l'invention consiste à appliquer des chargements mécaniques spécifiques à l'éprouvette de sorte qu'une fissure 3 se propage dans le volume 4 à partir de l'entaille 13 en suivant le chemin de fissuration cible 2. Pour que la fissure 3 puisse correspondre au mieux au chemin de fissuration cible 2, notamment pour éviter que la fissure ne se propage de manière instable dans le volume, un chargement supplémentaire appelé chargement de stabilisation est appliqué au volume 4. Les propriétés de ces chargements seront décrites ci-après.

La figure 1 représente également la pointe 5 de la fissure 3. La propagation de la fissure 3 dans le volume 4 est typiquement suivie au cours du procédé de fissuration au moyen de techniques d'imagerie connues, telles que la corrélation d'images numériques (CIN). L'application des chargements mécaniques et du chargement de stabilisation est typiquement précédée par des simulations numériques visant à résoudre un problème inverse consistant à déterminer les valeurs de chargements mécaniques qui peuvent être appliqués au matériau 1 pour orienter la fissure 3 à partir de sa pointe 5 en direction du chemin de fissuration cible 2.

Le chargement de stabilisation peut également être déterminé au moyen d'un calcul numérique brièvement discuté ci-après.

De telles simulations reposent typiquement sur des calculs employant au choix soit un modèle élastique linéaire de la rupture (MELR), soit un modèle d'endommagement diffus. Le procédé de détermination des chargements mécaniques en utilisant ces modèles dans le contexte de l'invention sera brièvement décrit ci-après. Typiquement, de telles simulations déterminent des valeurs de facteurs d'intensité des contraintes (FIC) au voisinage 6 de la pointe 5 de la fissure 3.

Le pilotage de la propagation de la fissure 3 dans le volume 4 se fait généralement en utilisant deux paramètres indépendants : l'angle de bifurcation 7 de la fissure, noté $\theta$ sur la figure 1, et le seuil d'incrément de longueur 8 noté $\Delta l$ sur la figure 1. L'angle de bifurcation 7 correspond à l'angle formé entre la direction actuelle de la fissure et la direction du chemin de fissuration cible. Le seuil d'incrément de longueur 8 correspond à la longueur sur laquelle la fissure 3 est sensée se propager avant d'être à nouveau réorientée.

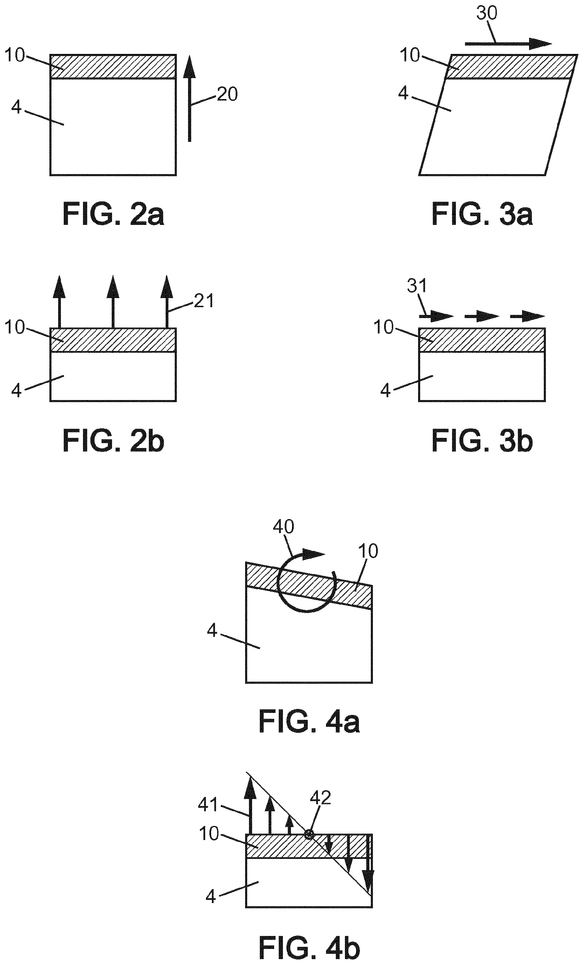

Les figures 2a, 2b, 3a, 3b, 4a, 4b illustrent trois types de chargements mécaniques (en efforts ou en déplacements) qui peuvent typiquement être appliquées à un matériau via une plaque mobile 10 pour y faire propager une fissure et pour stabiliser cette fissure. La figure 2a illustre un chargement en traction 20 appliqué au matériau au moyen de la plaque mobile 10. La figure 2b représente l'allure du champ de déplacement élémentaire $u_i(x,y)$ en traction 21 associé à un chargement en traction 20. La figure 3a représente un chargement en cisaillement 30 appliqué au matériau 1 via la plaque mobile 10. La figure 3b illustre l'allure du champ de déplacement élémentaire $u_i(x,y)$ en cisaillement 31 associé au chargement en cisaillement 30. La figure 4a représente une rotation 40 appliquée au matériau 1 via la plaque mobile 10. La rotation de la plaque peut être générée par exemple par un chargement en rotation ou bien par un couple d'efforts opposés. La figure 4b illustre l'allure du champ de déplacement élémentaire $u_i(x,y)$ 41 autour d'un point de rotation 42 associé à la rotation 40.

Dans le procédé de l'invention, il est courant de se fonder sur les trois types de chargements mécaniques représentés sur les figures 2a, 2b, 3a, 3b, 4a, 4b pour contrôler la propagation d'une fissure dans un volume pour lui faire suivre un chemin de fissuration cible et pour empêcher toute propagation instable de la fissure.

Les chargements mécaniques sont déterminés en résolvant un problème inverse faisant intervenir l'état de chargement mécanique proche de la pointe de la fissure, exprimé notamment au travers des valeurs de FIC, elles-mêmes liées aux amplitudes des chargements élémentaires. Un chargement élémentaire, quel que soit son type (en effort ou en déplacements) comprend un champ vectoriel de chargement élémentaire $u_i(x,y)$ et une amplitude scalaire de chargement élémentaire $U_i$ et s'exprime sous la forme $U_i(x,y) = U_i u_i(x,y)$, avec i un indice faisant une distinction entre divers degrés de liberté de chargement appliqué. Le chargement total $U(x,y)$ résulte de la somme des chargements

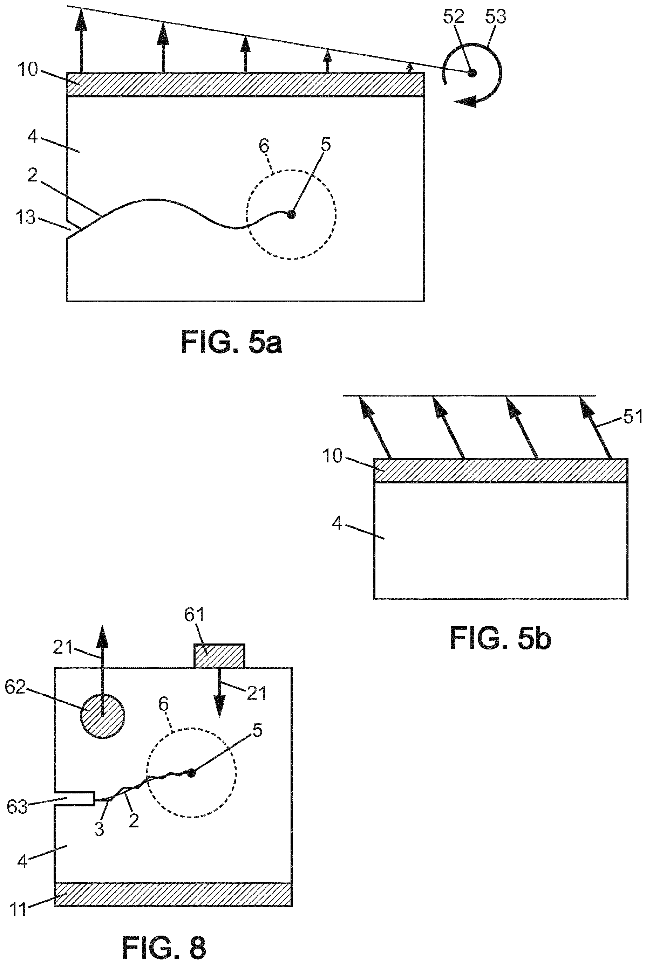

$U_i(x,y)$. En prenant exemple sur la figure 5a, le chargement total en déplacement U(x,y) résulte de la somme de deux déplacements élémentaires, à savoir un déplacement élémentaire en traction 21 (figure 2b) et un déplacement élémentaire en rotation 41 (figure 4b) centré autour du point 42 sur la figure 4b. Le déplacement résultant est une rotation excentrée 53, autour d'un point excentré 52.

Le chargement total est caractérisé par un ensemble d'amplitudes de chargements élémentaires $U_1$, $U_2$ ...$U_n$ activés par ce chargement. Par exemple, si nous considérons un volume de matière sollicitée via une seule plaque mobile 10 les trois chargements élémentaires pouvant être activés correspondent aux degrés de liberté du mouvement de corps rigide de la plaque mobile: une rotation $U_R$, une traction $U_T$ et un cisaillement $U_S$. Dans le cas illustré sur la figure 1, où un volume de matériau est soumis à un chargement via deux plaques mobiles rigides ce nombre de degrés de liberté passe à 3+3=6. Pour les géométries plus générales ce nombre de chargements élémentaires est lié au type de montage et de contrôle de l'essai. Typiquement pour mieux contrôler la fissuration des restrictions de certains types de mouvements sont appliquées, comme, par exemple, le blocage de la rotation $U_R$=0 ou un chargement proportionnel $U_T$ = Us ou une pré-compression $U_T$ = -1 millimètre.

Une matrice dite matrice de sensibilité relie les amplitudes de chargement élémentaire aux FIC ($K_I$, $K_{II}$). Un code éléments finis, comme par exemple le Code_Aster, peut être utilisé pour déterminer les valeurs de FIC élémentaires $(K_I^{\,i}, K_{II}^{\,i})$ associées à chaque sollicitation $u_i(x,y)$. Les valeurs des FIC totaux ($K_I$, $K_{II}$) caractérisant le chargement total U(x,y) s'écrivent en fonction de la matrice sensibilité de taille (2 x n) :

$$\begin{pmatrix} K_I \\ K_{II} \end{pmatrix} = \begin{pmatrix} K_I^1 & K_I^i & K_I^n \\ K_{II}^1 & \cdots K_{II}^i \cdots & K_{II}^n \end{pmatrix} \cdot \begin{pmatrix} U_1 \\ \ddot{U}_i \\ \ddot{U}_n \end{pmatrix} \quad (1)$$

L'indice i, qui varie de 1 à n, numérote les chargements élémentaires pouvant être appliqués au volume. A titre d'exemple illustratif simplifié, si nous considérons un volume de matière sollicité via une seule plaque mobile 10, les trois types de chargements en déplacement pouvant être appliqués sont : la rotation (R), la traction (T) ou le cisaillement (S) représentés sur les figures 2a, 2b, 3a, 3b, 4a, 4b. L'indice i prend donc trois valeurs R,T,S et le chargement total est caractérisé par un vecteur de la même dimension comportant trois amplitudes de chargement. L'équation matricielle (1) peut alors être réécrite sous la forme suivante :

$$\begin{pmatrix} K_I \\ K_{II} \end{pmatrix} = \begin{pmatrix} K_I^T & K_I^S & K_I^R \\ K_{II}^T & K_{II}^S & K_{II}^R \end{pmatrix} \cdot \begin{pmatrix} U_T \\ U_S \\ U_R \end{pmatrix} \quad (2)$$

La détermination des chargements compatibles avec le système (1) suppose des restrictions sur les degrés de liberté utilisés pour appliquer les chargements en vue de réduire le nombre de solutions existantes au problème inverse formulé ci-dessus.

Dans une forme simplifiée il est courant de ne prendre en compte que deux chargements mécaniques indépendants $U^I$ et $U^{II}$ appelés chargements élémentaires généralisés. L'utilisation de seulement deux paramètres de chargements mécaniques suffit pour contrôler à la fois l'angle de bifurcation θ de la fissure et le seuil d'incrément de longueur Δl de la fissure dans le volume. Typiquement, l'application des chargements mécaniques pour propager la fissure 3 dans le volume 4 peut s'effectuer grâce à une combinaison d'une rotation et de cisaillements de la plaque mobile 10, on aura donc $U^I$= $U_R$ et $U^{II}$= $U_S$. Le problème inverse peut alors s'écrire plus simplement sous la forme :

$$\begin{pmatrix} K_I \\ K_{II} \end{pmatrix} = \begin{pmatrix} K_I^I & K_I^{II} \\ K_{II}^I & K_{II}^{II} \end{pmatrix} \cdot \begin{pmatrix} U^I \\ U^{II} \end{pmatrix} + \begin{pmatrix} K_I^0 \\ K_{II}^0 \end{pmatrix} \quad (3)$$

où la matrice 2 x 2 $\begin{pmatrix} K_I^I & K_I^{II} \\ K_{II}^I & K_{II}^{II} \end{pmatrix}$ représente une matrice de sensibilité réduite et le vecteur $\begin{pmatrix} K_I^0 \\ K_{II}^0 \end{pmatrix}$ caractérise un état de pré-chargement.

À partir de ces relations liant les FIC aux chargements mécaniques, la résolution de l'équation (3) peut être effectuée au moyen d'un modèle de MELR, en déterminant les coefficients de la matrice sensibilité réduite $\begin{pmatrix} K_I^I & K_I^{II} \\ K_{II}^I & K_{II}^{II} \end{pmatrix}$.

L'utilisation du modèle de MELR suppose généralement un maillage du volume 4 au voisinage 6 de la pointe de la fissure 5.

La MELR fournit une expression entre le ratio des chargements, ces chargements étant exprimés au moyen des FIC totaux ($K_I$, $K_{II}$) et l'angle de bifurcation. Généralement, cette relation est écrite sous une forme liant les deux valeurs $K_I$ et $K_{II}$ : $K_{II} = f(\theta) K_I$. La formule analytique suivante peut être utilisée :

$$\frac{K_I}{K_{II}} = \frac{1 - 3\cos(\theta)}{\sin(\theta)} \qquad (4)$$

La composante inconnue $K_I$ est souvent notée $\eta$ et peut être décrite comme représentative d'une « intensité de chargement », c'est-à-dire une intensité de couplage entre les deux types de chargement élémentaires (chargement en traction et cisaillement dans l'exemple décrit ci-avant).

À partir de ces relations, le problème inverse permettant d'obtenir les chargements mécaniques à appliquer au volume pour que la fissure soit réorientée en direction du chemin de fissuration cible peut s'exprimer sous la forme :

$$\begin{pmatrix} U^I \\ U^{II} \end{pmatrix} = \begin{pmatrix} K_I^I & K_I^{II} \\ K_{II}^I & K_{II}^{II} \end{pmatrix}^{-1} \cdot \left[ \begin{pmatrix} 1 \\ f(\theta) \end{pmatrix} \eta - \begin{pmatrix} K_I^0 \\ K_{II}^0 \end{pmatrix} \right] \qquad (5)$$

ce qui revient à considérer un pré-chargement fixe :

$$\begin{pmatrix} U_{fix}^I \\ U_{fix}^{II} \end{pmatrix} = -\begin{pmatrix} K_I^I & K_I^{II} \\ K_{II}^I & K_{II}^{II} \end{pmatrix}^{-1} \cdot \begin{pmatrix} K_I^0 \\ K_{II}^0 \end{pmatrix} \qquad (6)$$

et un chargement proportionnel dont la direction est définie par :

$$\begin{pmatrix} U_{dir}^I \\ U_{dir}^{II} \end{pmatrix} = \begin{pmatrix} K_I^I & K_I^{II} \\ K_{II}^I & K_{II}^{II} \end{pmatrix}^{-1} \cdot \begin{pmatrix} 1 \\ f(\theta) \end{pmatrix} \qquad (7)$$

Pour réorienter la fissure, les chargements mécaniques à appliquer s'expriment donc sous la forme :

$$U(x, y) = \eta \left[ U_{dir}^I u_I(x, y) + U_{dir}^{II} u_{II}(x, y) \right] + U_{fix}^I u_I(x, y) + U_{fix}^{II} u_{II}(x, y) \qquad (8)$$

où les termes $u_I(x,y)$ et $u_{II}(x,y)$ représentent deux champs vectoriels pour les chargements mécaniques pilotant la réorientation de la fissure.

Les figures 5a et 5b proposent deux illustrations différentes de chargements mécaniques pouvant être appliqués à un volume 4 pour réorienter une fissure et lui faire suivre un chemin de fissuration cible. La figure 5a représente une combinaison de traction 20 et rotation centrée 40, donnant lieu à un chargement mécanique mixte de rotation excentrée 53, avec un point de pivotement 52 de la rotation situé à l'extérieur du volume 4. La figure 5b représente quant à elle un chargement mécanique, dit proportionnel, qui est issu d'une combinaison d'une traction avec un cisaillement (translation selon le vecteur 51).

Les simulations numériques présentées ci-avant ne concernent que la détermination des chargements mécaniques par résolution d'un problème inverse. Toutefois, il convient de remarquer que l'invention propose en outre de stabiliser la propagation de la fissure lors de l'application des chargements mécaniques. Pour ce faire, l'invention propose d'appliquer un chargement supplémentaire consacré spécifiquement à la stabilisation de la fissure.

En effet, l'application de chargements de traction ou de cisaillement provoque fréquemment l'apparition d'une propagation instable de la fissure. Comme expliqué ci-avant, l'instabilité est une notion connue dans le domaine de la fissuration et reflète généralement le fait qu'un paramètre de contrôle (ici l'angle de bifurcation 7 ou le seuil d'incrément de longueur 8) n'est plus maîtrisé. Ceci se manifeste le plus souvent par une fissure qui se propage suivant une longueur plus importante que le seuil d'incrément de longueur 8, ou bien une déviation angulaire par rapport à la direction visée.

La direction de propagation de la fissure est maîtrisée au moyen de l'angle de bifurcation 7 qui constitue donc un premier degré de liberté utilisé pour piloter la plaque mobile 10. Le seuil d'incrément de longueur 8 est maîtrisé au moyen de l'intensité de chargement qui constitue donc un deuxième degré de liberté utilisé pour piloter la plaque mobile 10.

La stabilisation de la propagation d'une fissure repose selon le procédé de l'invention sur l'utilisation d'un troisième degré de liberté noté S. Le chargement de stabilisation appliqué au moyen de ce troisième degré de liberté est décrit ci-après.

En principe, le chargement de stabilisation pourrait être déterminé de manière empirique, notamment dans le cas de matériaux simples. Toutefois, une approche quantitative permet d'utiliser à nouveau un modèle de MELR comme dans la résolution du problème inverse décrit ci-avant. Contrairement au problème inverse décrit ci-avant, le critère retenu pour garantir la stabilité d'une propagation de fissure est l'évolution des FIC entre deux positions successives de la pointe de la fissure séparées par un seuil d'incrément de longueur 8. En d'autres termes, la stabilisation est pilotée en comparant deux valeurs de FIC, l'un pour une position actuelle de la pointe 5 de la fissure 3 et l'autre pour une position future de la pointe de la fissure.

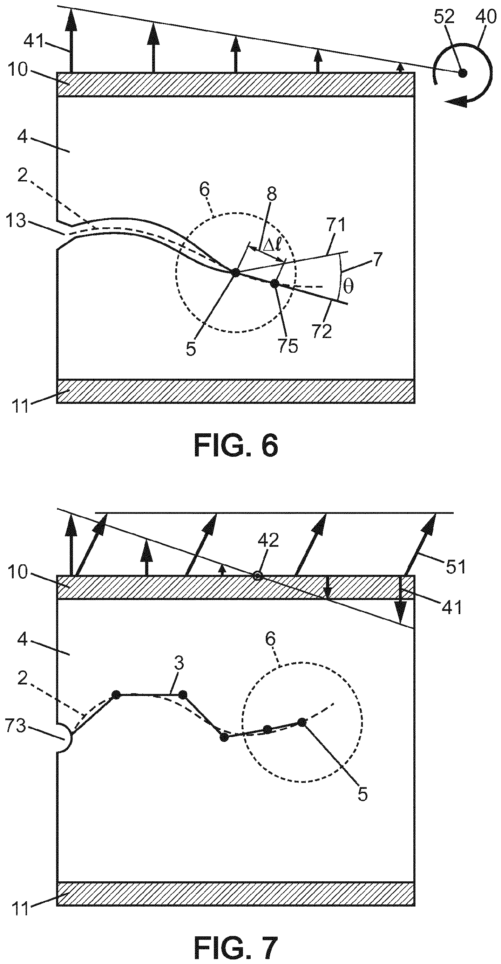

La figure 6 illustre une fissure 3 comprenant une pointe 5 de la fissure 3 et un point 75 de position futur de cette pointe 5. Le point 75 est séparé de la pointe 5 par une distance $\Delta l$ correspondant au seuil d'incrément de longueur 8. La direction définie par la droite 72 joignant la pointe 5 et le point 75 est orientée par rapport à une direction courante 71 de la fissure 3 d'un angle $\theta$ correspondant à l'angle de bifurcation 7 de la fissure.

Dans l'exemple bidimensionnel discuté ici, la propagation de la fissure est dominée par le mode I de fissuration, qui correspond à un chargement de traction perpendiculairement à un plan contenant la fissure. Le FIC $K_I(x+\Delta l)$ estimé pour une pointe future au point 75 s'exprime de la même manière que le FIC en tout autre point en fonction des chargements mécaniques :

$$K_I(x + \Delta l) = (K_\Delta^I \, K_\Delta^{II} \, K_\Delta^{III}) \cdot \begin{pmatrix} U^I \\ U^{II} \\ U^{III} \end{pmatrix} \quad (9)$$

où les termes $U^I$, $U^{II}$, $U^{III}$ désignent des chargements élémentaires généralisés dans la configuration future dans laquelle la pointe de fissure se trouve au point 75, de manière analogue à ce qui est présenté dans l'équation (1).

Le système d'équations à résoudre pour obtenir la direction future de chargement peut s'écrire sous la forme :

$$\begin{pmatrix} K_I \\ K_{II} \\ K_I(x + \Delta l) \end{pmatrix} = \begin{pmatrix} K_I^I & K_I^{II} & K_I^{III} \\ K_{II}^I & K_{II}^{II} & K_{II}^{III} \\ K_\Delta^I & K_\Delta^{II} & K_\Delta^{III} \end{pmatrix} \cdot \begin{pmatrix} U^I \\ U^{II} \\ U^{III} \end{pmatrix} \quad (10)$$

Le critère de stabilité de la propagation de la fissure en mode I peut s'exprimer sous la forme suivante :

$$\frac{\partial K_I(x + \Delta l)}{\partial(\Delta l)} \le 0 \quad (11)$$

En d'autres termes, le FIC pour le mode I n'augmente de préférence pas à mesure que la fissure se propage. Il peut toutefois rester constant ou bien diminuer.

Il est possible de formuler ce critère sous la forme d'une variable S s'exprimant sous la forme :

$$S = \frac{K_I(x + \Delta l) - K_I}{K_I} \quad (12)$$

La propagation d'une fissure est donc considérée comme potentiellement stable lorsque -1<S <0 et potentiellement instable lorsque S>=0. Plus la valeur de S est faible plus la stabilité est renforcée.

Un autre critère de stabilité consiste à limiter de manière absolue la valeur admissible des FIC en les empêchant d'atteindre une valeur de ténacité au-delà de laquelle le matériau se détériore de manière instable et non contrôlée.

Le pilotage d'une fissure 3 dans le volume 4 se fait donc à partir de trois paramètres indépendants, ou degrés de liberté : l'angle de bifurcation 7, le seuil d'incrément de longueur 8 et le critère de stabilité S dans l'exemple décrit ci-dessus.

À titre d'exemple non limitatif, il est possible de vérifier le critère de stabilité pour la propagation de la fissure en appliquant une rotation au volume. La figure 7 représente une combinaison d'un chargement de stabilisation par rotation 41, autour d'un point de pivot 42, avec des chargements mécaniques résultant d'une combinaison de chargements en traction et de cisaillement, donnant lieu aux déplacements 51.

La figure 7 représente en outre une fissure 3 partant d'une entaille arrondie 73 et suivant le chemin de propagation cible 2.

Un autre exemple non limitatif de chargement de stabilisation qui peut être appliqué à une éprouvette est représenté sur la figure 8. Cette figure présente des zones 61, 62 d'application de chargements mécaniques et de stabilisation distinctes et réparties sur des surfaces différentes du volume 4. La stabilisation est alors obtenue en appliquant deux chargements de sens opposés permettant de créer une zone de compression en amont de la pointe 5 de la fissure 3 en ces différentes zones. On parle alors de stabilisation par efforts ponctuels. D'autres modes de réalisation peuvent être envisagés employant, par exemple, des trous d'alésage compacts pour accéder au matériau 1. La stabilisation par efforts ponctuels peut notamment se retrouver dans des éprouvettes de type CT, ou « compact tension specimen » selon la terminologie anglo-saxonne.

La fissure 3 représentée sur la figure 8 a amorcé à partir d'une entaille rectangulaire 63.

De manière schématique, une stabilisation de la propagation d'une fissure peut être obtenue lorsqu'une compression du matériau est effectuée en amont de la pointe 5 de la fissure 3. Un autre effet qui permet de contribuer à la stabilisation de la propagation d'une fissure est la formation d'un gradient de traction en amont d'une pointe de la fissure.

L'invention permet ainsi de propager une fissure dans un volume de matériau de manière contrôlée en évitant une propagation instable de la fissure telle que décrite ci-avant à titre d'exemple illustratif.

En outre, la fissuration contrôlée de la présente invention repose sur une démarche itérative consistant à réorienter une fissure lorsque cette dernière s'éloigne du chemin de fissuration cible 2 ou lorsqu'un critère de longueur a été atteint ou dépassé.

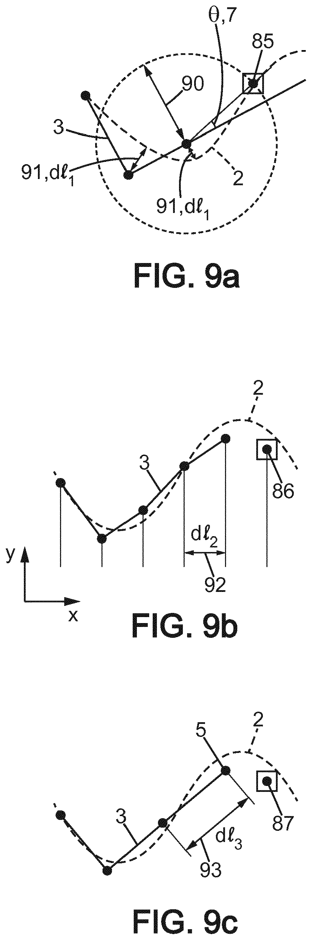

Pour illustrer quelques exemples de réalisation de cette réorientation suivant des critères prédéfinis, les figures 9a à 9c présentent schématiquement des fissures ayant subi plusieurs réorientations pour suivre le chemin de fissuration cible 2. En utilisant l'un des critères d'arrêt définis ci-dessous, il est possible de forcer le procédé à réorienter la fissure 3.

Comme illustré sur la figure 9a, la pointe 5 de la fissure 3 s'est éloignée du chemin de fissuration cible 2 d'une valeur seuil « $dl_1$ » correspondant à écart seuil 91. Sur la figure 9a, la réorientation de la fissure définit une position cible à atteindre lors de la prochaine fissuration du volume de matériau. Cette position cible correspond à une intersection 85 entre un cercle de rayon 90 et le chemin de fissuration cible 2 en amont de la pointe 5 de la fissure 3. Le rayon 90 peut avoir une valeur égale au seuil d'incrément de longueur $\Delta l$, ou avoir une autre valeur prédéfinie. Le segment joignant la pointe 5 et le point cible permet en outre de définir l'angle de bifurcation 7.

Plusieurs critères d'arrêt sont possibles, l'objectif étant d'arrêter la propagation avant d'appliquer de nouveau chargements, engendrant une réorientation progressive de la fissure.

Dans les deux autres variantes des figures 9b et 9c, le critère de réorientation ne repose plus sur un critère d'éloignement par rapport au chemin de fissuration cible 2, mais sur un critère de contrôle d'avancée de la fissure.

La figure 9b propose de réorienter une fissure 3 lorsque cette dernière s'est propagée suivant un axe (l'axe x sur la figure 9b) sur une distance correspondant à une valeur seuil « $dl_2$ ». Cette valeur seuil correspond ici à incrément seuil 92.

La figure 9c propose une variante dans laquelle une fissure 3 est réorientée lorsque la fissure s'est propagée dans n'importe quelle direction sur une distance cumulée correspondant à une valeur seuil « $dl_3$ ». Cette valeur seuil correspond sur la figure 9c à un incrément seuil total 93.

Selon ces deux derniers critères, il est possible d'estimer le nombre de réorientations à partir de la longueur du chemin de fissuration cible et de la valeur seuil dl sélectionnée.

De manière particulièrement avantageuse, il convient de remarquer que le pilotage en fissuration d'un volume de matériau peut se faire continûment en se contentant de transformer les chargements mécaniques courants et le chargement de stabilisation courant en de nouveaux chargements permettant de suivre le chemin de fissuration cible 2. Toutefois, il est préférable de passer par une phase de décharge du volume 4 lors d'une réorientation de la fissure. Cette décharge implique soit une diminution de l'intensité des chargements mécaniques appliqués au matériau, soit une suppression des chargements mécaniques et de stabilisation, de sorte que la fissure 3 se referme avant que les nouveaux chargements mécaniques permettant de réorienter la fissure ne soient appliqués. Cette approche plus prudente permet d'éviter un dépassement de la ténacité au niveau de la pointe 5 de la fissure.

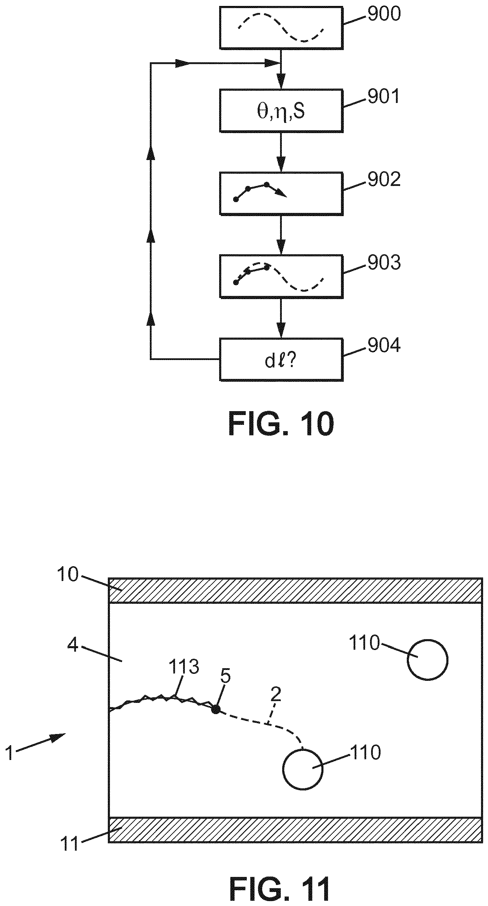

Il va à présent être décrit un algorithme de mise en oeuvre du procédé décrit ci-avant, en lien avec la figure 10.

Tout d'abord, l'invention propose de définir un chemin de fissuration cible 2 (première étape 900).

Ensuite, lors d'une deuxième étape 901, des chargements mécaniques et un chargement de stabilisation sont déterminés. Cette deuxième étape correspond au début d'une boucle itérative de propagation de la fissure.

Dans une troisième étape 902, les chargements mécaniques et le chargement de stabilisation sont appliqués au volume 4 de matériau 1.

Dans une quatrième étape 903, pouvant avantageusement être mise en oeuvre en même temps que la troisième étape 902, la fissure 3 est observée par une technique d'imagerie connue, telle que par exemple la CIN. La CIN repose sur une méthode optique permettant de mesurer le champ de déplacement en tous points de la surface imagée. La surface peut au préalable être préparée pour faciliter l'identification des différents éléments du volume et de la fissure. Le principe de la CIN étant connu, il n'est pas rappelé ici. D'autres techniques de surveillance de l'évolution de la pointe 5 de la fissure 3 peuvent être mises en oeuvre au besoin.

Lorsque la surveillance de la pointe 5 de la fissure 4 a permis de détecter le dépassement d'un critère seuil, la propagation de la fissure 3 est stoppée à la cinquième étape 904 et le procédé redémarre une boucle de propagation en effectuant une nouvelle détermination des paramètres $\theta$, $\eta$ et S permettant de trouver les chargements mécaniques et le chargement de stabilisation adaptés pour faire propager la fissure suivant le chemin de fissuration 2. À cet égard, il convient de remarquer qu'après avoir propagé la fissure 3 sur une longueur donnée, les FIC et le maillage utilisé dans la résolution du problème inverse sont réactualisés. Pour ce faire, le modèle dans lequel le problème inverse est résolu correspond à un modèle du volume 4 qui prend en compte la présence d'une fissure 3 courante.

Le présent procédé peut en outre comprendre une variante dans laquelle, pour résoudre un problème inverse à la place d'une méthode s'appuyant sur la MELR, un modèle d'endommagement diffus est utilisé pour déterminer les nouveaux chargements mécaniques permettant une réorientation stable de la fissure. Selon une telle approche, il n'est plus nécessaire d'avoir une mise à jour du maillage à chaque étape de propagation, car la fissure est représentée par le champ d'endommagement.

Une fois que l'historique de chargement provoquant une fissuration stable selon le chemin prédéfini est établi, une simulation complète des chargements mécaniques à appliquer pour suivre le chemin de fissuration cible 2 peut être obtenue, sans nécessiter des calculs itératifs comme dans le cas décrit précédemment.

L'algorithme décrit succinctement ci-avant correspond donc à une boucle hybride permettant de piloter la propagation d'une fissure dans un volume de matériau en combinant observation de la propagation et simulation d'une propagation mise à jour en prenant en compte les observations. Cette approche permet de créer des fissures de forme voulue dans le matériau et de créer des conditions de fissuration expérimentales adaptées pour tester de manière qualitative et quantitative les propriétés d'un matériau en fissuration. Le type de chemin de fissuration cible 2 choisi peut varier d'une fissuration à l'autre mais comprend généralement des formes sinueuses.

Une variante de la boucle hybride peut être mise en oeuvre, dans laquelle l'essai réel est remplacé par une simulation de propagation de fissure par un modèle d'endommagement diffus. Cette variante présente l'avantage de permettre de tester plusieurs chemins de fissuration avant l'expérience réelle. Une fois que l'ensemble des différents chargements successifs provoquant une fissuration stable selon le chemin prédéfini est déterminé, une expérience réelle peut être effectuée en appliquant l'ensemble de ces chargements successifs sans passer par la méthode itérative.

L'invention permet de fabriquer des pièces identiques, et en particulier de reproduire une même fissure dans différents échantillons. Cette grande reproductibilité des fissures propagées dans les échantillons permet par exemple de reproduire dans un échantillon une fissure observée dans une structure endommagée, par exemple un bâtiment en béton endommagé. Les échantillons reproduisant une fissure observée peuvent être soumis à différentes expériences de fissuration en vue de déterminer une stratégie de réparation de la fissure dans le bâtiment endommagé.

L'invention peut notamment trouver une autre application pour orienter la propagation d'une fissure indésirable en direction d'une zone d'arrêt. Une telle application s'apparente à un arrêt dynamique de fissuration. Cette application peut notamment servir à éviter un risque majeur lié à la propagation de fissures, tel que par exemple une fuite radioactive ou la rupture d'une aile d'avion. Une fissure indésirable peut être la conséquence d'un chargement accidentel (surpression, poids excédentaire, déplacement, gonflement suite à un chargement thermique). Il a été observé qu'une fissure a tendance à s'arrêter sur des singularités géométriques de type trou. Les techniques de contrôle de fissuration de l'art antérieur ne permettent pas d'identifier les emplacements les plus propices pour positionner ces singularités géométriques en vue d'éviter l'apparition de fissures pouvant générer des fuites. Un placement arbitraire des singularités géométriques peut ainsi laisser une fissure indésirable passer entre les singularités sans y être arrêtée.

Le procédé objet de la présente invention peut ainsi être mis à contribution pour déterminer les chargements qu'il convient d'appliquer à une structure endommagée par une fissure pour propager cette fissure vers une zone d'arrêt. L'emplacement de ces zones d'arrêt peut donc ne plus être arbitraire mais optimisé en vue de simplifier la réorientation d'une fissure accidentelle.

La figure 11 illustre un exemple de structure endommagée (volume 4 de matériau 1) dans laquelle l'application de chargements permet de réorienter sous contrôle stable la fissure 3 vers une zone d'arrêt 110 comprenant un trou.

L'invention se rapporte également à un système agencé de manière à pouvoir mettre en oeuvre le procédé décrit ci-avant.

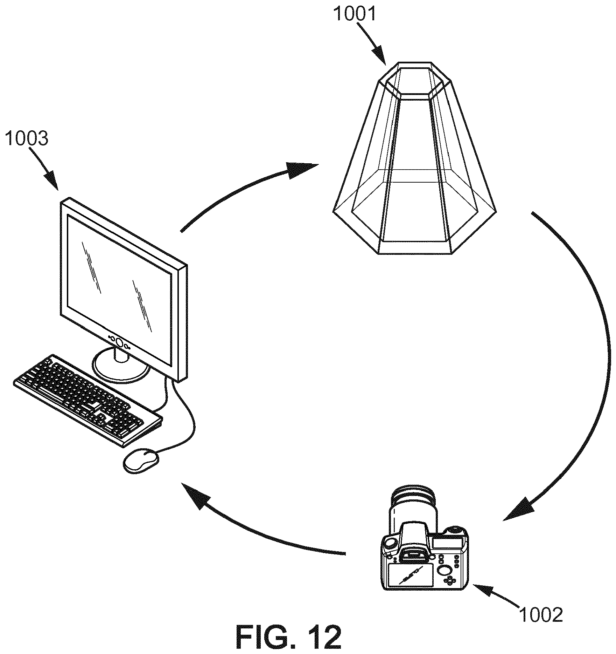

La figure 12 représente ainsi à titre illustratif un exemple de système pouvant servir à la mise en oeuvre du procédé. Ce système se compose d'une machine d'essais 1001 sous la forme d'un double hexapode configuré pour pouvoir d'une part mesurer des chargements mécaniques subis par une éprouvette et d'autre part appliquer des chargements mécaniques et de stabilisation à l'éprouvette. La machine d'essais coopère avec un capteur 1002 configuré pour effectuer un suivi de la propagation de la pointe 5 de la fissure et identifier des écarts par rapport au chemin de fissuration cible 2. Le capteur coopère avec une unité de traitement informatique 1003 prévue pour analyser les données recueillies et effectuer les simulations impliquant la résolution des problèmes inverses décrits ci-avant. Les chargements mécaniques et de stabilisation issus de ces données sont ensuite renvoyés à la machine d'essais 1001.

Bien que la description fournie à titre d'exemple ci-avant considère un pilotage de la fissure en utilisant les trois degrés de liberté : angle de bifurcation 7, seuil d'incrément de longueur 8 et critère de stabilité S, d'autres degrés de liberté peuvent être choisis. De même, il n'est pas indispensable de se limiter à trois degrés de liberté pour piloter la fissuration même si l'usage d'un nombre faible de degrés de liberté permet de simplifier le procédé. Un avantage à utiliser trois degré de liberté uniquement réside dans le fait que les autres degrés de liberté peuvent être utilisés pour éliminer les mouvements parasites affectant l'éprouvette.

La présente invention trouve application dans le domaine de la déformation de matériaux de tout type. Toutefois, elle trouve un intérêt particulier dans le contrôle de la propagation d'une fissure en vue de fabriquer des pièces dans des matériaux fragiles (tels que les verres et les céramiques par exemple), quasi-fragiles (tels que par exemple les bétons, métaux à basses températures, le graphite) ou les matériaux plastiques. L'invention permet également de concevoir de nouvelles expériences en vue de tester les propriétés des matériaux afin de concevoir des structures plus résistantes aux phénomènes de fissuration, ou bien des structures dans lesquelles les propriétés de fissuration sont maîtrisées. De telles optimisations permettent de forcer naturellement une fissure à éviter une zone sensible et à privilégier des zones de moindre importance de la structure.

## Revendications

1. Procédé de contrôle de fissuration d'un matériau, le procédé comprenant :

   - définir un chemin de fissuration cible (2) dans un volume (4) donné de matériau (1) ;
   - appliquer des chargements mécaniques audit matériau pour contrôler la propagation d'une fissure (3) dans le volume de sorte que la fissure se propage dans le matériau sensiblement suivant le chemin de fissuration cible,

   le procédé étant **caractérisé en ce qu'**il comprend en outre :

   - appliquer un chargement de stabilisation audit volume, le chargement de stabilisation étant configuré pour éviter une propagation instable de la fissure.

2. Procédé de contrôle de fissuration selon la revendication 1, dans lequel l'application du chargement de stabilisation comprend en outre :

   - appliquer un gradient de chargement en traction-compression en amont d'une pointe (5) de la fissure.

3. Procédé de contrôle de fissuration selon l'une quelconque des revendications 1 ou 2, dans lequel l'application du chargement de stabilisation comprend en outre :

   - estimer la valeur d'un facteur d'intensité des contraintes représentatif d'un état de chargement en traction subi par le matériau au voisinage d'une pointe de la fissure perpendiculairement à la fissure ;
   - choisir un chargement de stabilisation conservant ou diminuant la valeur du facteur d'intensité des contraintes sur une longueur de propagation donnée de la fissure.

4. Procédé de contrôle de fissuration selon l'une quelconque des revendications 1 à 3, dans lequel l'application des chargements mécaniques est effectuée en exploitant au moins un premier degré de liberté du volume (7) ainsi que d'un deuxième degré de liberté du volume et dans lequel l'application du chargement de stabilisation est effectuée en exploitant un troisième degré de liberté du volume.

5. Procédé de contrôle de fissuration selon l'une quelconque des revendications 1 à 4, dans lequel le chargement de stabilisation comprend une compression en amont d'une pointe de la fissure.

6. Procédé de contrôle de fissuration selon l'une quelconque des revendications 1 à 5, dans lequel l'application du chargement de stabilisation comprend en outre :

   - appliquer un chargement en plusieurs zones (61, 62) distinctes du volume.

7. Procédé de contrôle de fissuration selon l'une quelconque des revendications 1 à 6, dans lequel le chargement de stabilisation comprend une rotation (40).

8. Procédé de contrôle de fissuration selon l'une quelconque des revendications 1 à 7, comprenant en outre, lorsque la fissure s'écarte du chemin de fissuration cible :

   - réduire les chargements mécaniques appliqués au matériau ;
   - appliquer de nouveaux chargements mécaniques permettant d'orienter la fissure en direction du chemin de fissuration cible.

9. Procédé de contrôle de fissuration selon l'une quelconque des revendications 1 à 8, comprenant en outre :

   - mesurer l'avancement d'une pointe de la fissure dans le volume ;
   - modifier les chargements mécaniques lorsqu'une longueur de propagation de la fissure atteint une valeur seuil correspondant à un incrément seuil (92) prédéfini.

10. Procédé de contrôle de fissuration selon l'une quelconque des revendications 1 à 9, comprenant en outre :

    - mesurer l'avancement d'une pointe de la fissure dans le volume ;
    - identifier un écart entre la position de la pointe de la fissure et le chemin de fissuration cible ;
    - modifier les chargements mécaniques lorsque l'écart atteint une valeur seuil correspondant à un écart seuil (91) prédéfini.

11. Procédé de contrôle de fissuration selon l'une quelconque des revendications 9 ou 10, comprenant en outre, lorsque la valeur seuil est atteinte :

    - déterminer une intersection (85) d'un cercle ayant pour rayon (90) un incrément de longueur, centré sur la pointe de la fissure, avec le chemin de fissuration cible ;
    - appliquer des chargements mécaniques au matériau pour orienter la fissure en direction de l'intersection.

12. Procédé de contrôle de fissuration selon l'une quelconque des revendications 9 à 11, comprenant en outre le processus suivant mis en oeuvre itérativement :

    - effectuer une simulation de la propagation d'une fissure selon le chemin de fissuration cible dans un modèle du volume prenant en compte la fissure afin de déterminer les chargements mécaniques permettant d'orienter la fissure suivant le chemin de fissuration cible ;
    - appliquer au matériau des chargements mécaniques déterminés par la simulation.

13. Procédé de contrôle de fissuration selon l'une quelconque des revendications 1 à 12, dans lequel le volume de matériau comprend une fissure initiale (113) et des zones d'arrêt (110), le procédé comprenant en outre :

    - définir le chemin de fissuration cible de sorte à diriger la fissure initiale vers une zone d'arrêt.

14. Système pour contrôler la fissuration d'un matériau, le système comprenant une machine d'essais (1001) adaptée pour appliquer des chargements mécaniques audit matériau en contrôlant la propagation d'une fissure dans un volume du matériau de sorte que la fissure se propage dans le matériau sensiblement suivant un chemin de fissuration cible, la machine d'essai étant en outre configurée pour appliquer un chargement de stabilisation au matériau permettant d'éviter une propagation instable de la fissure.

15. Système selon la revendication 14, comprenant en outre :

    - un capteur (1002) adapté pour déterminer une position de la pointe de la fissure dans le volume ; et
    - une unité informatique (1003) adaptée pour effectuer une simulation d'une propagation de la fissure et pour piloter la machine d'essais.

**Patentansprüche**

1. Verfahren zur Steuerung der Spaltung eines Materials, wobei das Verfahren aufweist:

   - Definieren eines angestrebten Spaltungswegs (2) in einem gegebenen Volumen (4) eines Materials (1);
   - Anlegen von mechanischen Belastungen an das Material, um die Ausbreitung eines Spalts (3) in dem Volumen zu steuern, so dass der Spalt sich in dem Material im Wesentlichen gemäß dem angestrebten Spaltungsweg ausbreitet,

   wobei das Verfahren **dadurch gekennzeichnet ist, dass** es ferner aufweist:

   - Anlegen einer Stabilisationsbelastung an das Volumen, wobei die Stabilisationsbelastung konfiguriert ist, eine instabile Ausbreitung des Spalts zu verhindern.

2. Verfahren zur Steuerung der Spaltung nach Anspruch 1, in welchem das Anlegen der Stabilisationsbelastung ferner aufweist:

   - Anlegen eines einem Punkt (5) des Spalts vorgelagerten Zug-Druck-Belastungsgradienten.

3. Verfahren zur Steuerung der Spaltung nach einem der Ansprüche 1 oder 2, in welchem das Anlegen der Stabilisationsbelastung ferner aufweist:

   - Schätzen des Werts eines Intensitätsfaktors der Beanspruchungen, der einen Zugbelastungszustand repräsentiert, dem das Material in der Nähe eines Punkts der Spalts senkrecht zum Spalt ausgesetzt ist;
   - Wählen einer Stabilisationsbelastung, die den Wert des Intensitätsfaktors der Beanspruchungen über eine gegebene Ausbreitungslänge des Spalts beibehält oder verringert.

4. Verfahren zur Steuerung der Spaltung nach einem der Ansprüche 1 bis 3, in welchem das Anlegen der mechanischen Belastungen unter Nutzung mindestens eines ersten Freiheitsgrads des Volumens (7) sowie eines zweiten Freiheitsgrads des Volumens (7) durchgeführt wird und in welchem das Anlegen der Stabilisationsbelastung unter Nutzung eines dritten Freiheitsgrads des Volumens durchgeführt wird.

5. Verfahren zur Steuerung der Spaltung nach einem der Ansprüche 1 bis 4, in welchem die Stabilisationsbelastung eine einem Punkt des Spalts vorgelagerte Kompression aufweist.

6. Verfahren zur Steuerung der Spaltung nach einem der Ansprüche 1 bis 5, in welchem das Anlegen der Stabilisationsbelastung ferner aufweist:

   - Anlegen einer Belastung in mehreren unterschiedlichen Zonen (61, 62) des Volumens.

7. Verfahren zur Steuerung der Spaltung nach einem der Ansprüche 1 bis 6, in welchem die Stabilisationsbelastung eine Rotation (40) aufweist.

8. Verfahren zur Steuerung der Spaltung nach einem der Ansprüche 1 bis 7, ferner aufweisend, wenn der Spalt sich von dem angestrebten Spaltungsweg entfernt:

   - Verringern der an dem Material anliegenden mechanischen Belastungen;
   - Anlegen neuer mechanischer Belastungen, die erlauben, den Spalt in Richtung des angestrebten Spaltungswegs zu orientieren.

9. Verfahren zur Steuerung der Spaltung nach einem der Ansprüche 1 bis 8, ferner aufweisend:

   - Messen des Fortschreitens eines Punkts des Spalts in dem Volumen;
   - Ändern der mechanischen Belastungen, wenn eine Ausbreitungslänge des Spalts einen Schwellenwert erreicht, der einem vordefinierten Schwelleninkrement (92) entspricht.

**10.** Verfahren zur Steuerung der Spaltung nach einem der Ansprüche 1 bis 9, ferner aufweisend:

- Messen des Fortschreitens eines Punkts des Spalts in dem Volumen;
- Identifizieren eines Abstands zwischen der Position des Spalts und dem angestrebten Spaltungsweg;
- Ändern der mechanischen Belastungen, wenn der Abstand einen Schwellenwert erreicht, der einem vordefinierten Schwellenabstand (91) entspricht.

**11.** Verfahren zur Steuerung der Spaltung nach einem der Ansprüche 9 oder 10, aufweisend ferner, wenn der Schwellenwert erreicht ist:

- Bestimmen eines Schnittpunkts (85) eines Kreises, der als Radius (90) ein Längeninkrement hat und auf den Punkt des Spalts zentriert ist, mit dem angestrebten Spaltungsweg;
- Anlegen von mechanischen Belastungen an das Material, um den Spalt in Richtung des Schnittpunkts zu orientieren.

**12.** Verfahren zur Steuerung der Spaltung nach einem der Ansprüche 9 bis 11, aufweisend ferner den folgenden iterativ ausgeführten Prozess:

- Durchführen einer Simulation der Ausbreitung eines Spalts gemäß dem angestrebten Spaltungsweg in einem Modell des Volumens unter Berücksichtigung des Spalts, um die mechanischen Belastungen zu bestimmen, die erlauben, den Spalt gemäß dem angestrebten Spaltungsweg zu orientieren;
- Anlegen der durch die Simulation bestimmten mechanischen Belastungen an das Material.

**13.** Verfahren zur Steuerung der Spaltung nach einem der Ansprüche 1 bis 12, in welchem das Materialvolumen einen Startspalt (113) und Stoppzonen (110) aufweist, wobei das Verfahren ferner aufweist:

- Definieren des angestrebten Spaltungswegs derart, um den Startspalt zu einer Stoppzone zu lenken.

**14.** System zur Steuerung der Spaltung eines Materials, wobei das System eine Prüfmaschine (1001) aufweist, die angepasst ist, mechanische Belastungen an das Material anzulegen und dabei die Ausbreitung eines Spalts in einem Volumen des Materials derart zu steuern, dass der Spalt sich in dem Material im Wesentlichen gemäß einem angestrebten Spaltungsweg ausbreitet, wobei die Prüfmaschine ferner konfiguriert ist, eine Stabilisationsbelastung an das Material anzulegen, die erlaubt, eine instabile Ausbreitung des Spalts zu verhindern.

**15.** System nach Anspruch 14, ferner aufweisend:

- einen Detektor (1002) zur Bestimmung einer Position des Punkts des Spalts in dem Volumen; und
- eine Datenverarbeitungseinheit (1003) zur Durchführung einer Simulation einer Ausbreitung des Spalts und zur Steuerung der Prüfmaschine.

**Claims**

**1.** Method for controlling the cracking of a material, the method comprising:

- defining a target crack path (2) in a given volume (4) of material (1);
- applying mechanical loads to said material in order to control the propagation of a crack (3) within the volume such that the crack propagates in the material substantially along the target crack path,

the method being **characterized in that** it further comprises:

- applying a stabilization load to said volume, the stabilization load being configured to avoid unstable propagation of the crack.

**2.** Cracking control method according to claim 1, wherein the application of the stabilization load further comprises:

- applying a tension-compression load gradient upstream of a tip (5) of the crack.

3. Cracking control method according to any one of claims 1 or 2, wherein the application of the stabilization load further comprises:

   - estimating the value of a stress intensity factor representative of a state of tensile load on the material near a tip of the crack, perpendicular to the crack;
   - selecting a stabilization load which maintains or decreases the value of the stress intensity factor for a given propagation length of the crack.

4. Cracking control method according to any one of claims 1 to 3, wherein the application of mechanical loads is carried out by exploiting at least a first degree of freedom of the volume (7) and a second degree of freedom of the volume, and wherein the application of the stabilization load is carried out by exploiting a third degree of freedom of the volume.

5. Cracking control method according to any one of claims 1 to 4, wherein the stabilization load comprises a compression upstream of a tip of the crack.

6. Cracking control method according to any one of claims 1 to 5, wherein the application of the stabilization load further comprises:

   - applying a load in several different zones (61, 62) of the volume.

7. Cracking control method according to any one of claims 1 to 6, wherein the stabilization load comprises a rotation (40).

8. Cracking control method according to any one of claims 1 to 7, further comprising, when the crack deviates from the target crack path:

   - reducing the mechanical loads applied to the material;
   - applying new mechanical loads to direct the crack towards the target crack path.

9. Cracking control method according to any one of claims 1 to 8, further comprising:

   - measuring the progress of a crack tip within the volume;
   - modifying the mechanical loads when a propagation length of the crack reaches a threshold value corresponding to a predefined threshold increment (92).

10. Cracking control method according to any one of claims 1 to 9, further comprising:

   - measuring the progress of a crack tip within the volume;
   - identifying a deviation between the position of the crack tip and the target crack path;
   - modifying the mechanical loads when the deviation reaches a threshold value corresponding to a predefined threshold deviation (91).

11. Cracking control method according to any one of claims 9 or 10, further comprising, when the threshold value is reached:

   - determining an intersection (85) of a circle whose radius (90) is a length increment, centered on the tip of the crack, with the target crack path;
   - applying mechanical loads to the material in order to direct the crack towards the intersection.

12. Cracking control method according to any one of claims 9 to 11, further comprising the following iteratively applied process:

   - simulating the propagation of a crack along the target crack path in a model of the volume incorporating the crack in order to determine the mechanical loads that will direct the crack along the target crack path;
   - applying to the material the mechanical loads determined by the simulation.

13. Cracking control method according to any one of claims 1 to 12, wherein the volume of material comprises an initial crack (113) and stop zones (110), the method further comprising:

- defining the target crack path so as to direct the initial crack towards a stop zone.

14. System for controlling the cracking of a material, the system comprising a testing machine (1001) adapted to apply mechanical loads to said material while controlling the propagation of a crack in a volume of the material such that the crack propagates in the material substantially along a target crack path, the testing machine being further configured to apply a stabilization load to the material in order to avoid unstable propagation of the crack.

15. The system of claim 14, further comprising:

- a sensor (1002) adapted to determine a position of the crack tip in the volume; and
- a computing unit (1003) adapted to simulate a propagation of the crack and to control the testing machine.

FIG. 1

FIG. 2a

FIG. 3a

FIG. 2b

FIG. 3b

FIG. 4a

FIG. 4b

FIG. 5a

FIG. 5b

FIG. 8

FIG. 6

FIG. 7

FIG. 9a

FIG. 9b

FIG. 9c

FIG. 10

FIG. 11

FIG. 12